# EUROPÄISCHE PATENTANMELDUNG

(11) **EP 2 447 047 A1**
(43) Veröffentlichungstag der Anmeldung: **02.05.2012**
(21) Anmeldenummer: 11187134.9
(22) Anmeldetag: 28.10.2011
(51) Int. Cl.: B29C 67/00, B01F 13/02, B01F 7/00, B01F 7/18

(54) **Vorrichtung zur Behandlung von Pulver für eine Vorrichtung zum Herstellen eines dreidimensionalen Objekts und Vorrichtung zum Herstellen eines dreidimensionalen Objekts**

(30) Priorität: 29.10.2010 DE 102010043166
(71) Anmelder: EOS GmbH Electro Optical Systems, 82152 Krailling (DE)
(72) Erfinder: Bokodi, Attila, 85560 Ebersberg (DE); Reichel, Thomas, 82110 Germering (DE)
(74) Vertreter: Prüfer & Partner GbR European Patent Attorneys

(57) **Zusammenfassung**

Eine Vorrichtung (1) zum Vermischen von Pulver (17) für eine Vorrichtung zum Herstellen eines dreidimensionalen Objekts weist sowohl eine Rührvorrichtung (4) als auch eine Druck-Fluid-Versorgungseinrichtung zum Fluidisieren des Pulvers (17) auf. Eine Vorrichtung zum Herstellen von dreidimensionalen Objekten ist angepasst, mit der Vorrichtung (1) zum Vermischen von Pulver (17) verbunden zu werden, und bildet zusammen mit der Vorrichtung (1) zum Vermischen von Pulver (17) ein System.

## Beschreibung

Die Erfindung betrifft eine Vorrichtung zur Behandlung von Pulver, insbesondere eine Vorrichtung zum Vermischen von Pulver, die das Durchmischen mit einem geringen Energieeinsatz ausführt und ressourcenschonend erstellt wird, für eine Vorrichtung zum Herstellen eines dreidimensionalen Objekts, insbesondere eine Lasersintervorrichtung. Ferner betrifft die Erfindung eine Vorrichtung zum Herstellen eines dreidimensionalen Objekts.

Es sind allgemein pulverbasierte generative Verfahren zum Herstellen dreidimensionaler Objekte wie z.B. das selektive Lasersintern bekannt, bei denen das dreidimensionale Objekt schichtweise durch Verfestigen eines pulverförmigen Materials gebildet wird. Bei der Technik des selektiven Lasersinterns erfolgt die Verfestigung mittels eines auf die Pulverschicht auftreffenden Laserstrahls. Das nicht verfestigte Pulver wird üblicherweise mit Neupulver gemischt und wiederverwendet. Insbesondere im Fall des selektiven Lasersinterns kann es bei der Rückführung des Altpulvers in den Werkstoffkreislauf zu einer Schichtung des Werkstoffes aus unterschiedlichen Sinterprozessen in einem für das Altpulver vorgesehenen Altpulverbehälter kommen. Die unterschiedlichen Schichten können sich in den Pulvereigenschaften unterscheiden, was zu Einflüssen auf den Sinterprozess und der Bauteilqualität führt. Außerdem sind je nach verwendetem Pulver die Eigenschaften des Altpulvers nicht identisch zu denen des Neupulvers, z.B. kann bei Verwendung von thermoplastischen Pulvern eine thermische Alterung vorkommen. Auch gibt es Anwendungen der pulverbasierten generativen Verfahren, bei denen Mischungen aus verschiedenen Pulverarten, die sich in ihrer chemischen Zusammensetzung und/oder der Korngröße unterscheiden, verwendet werden.

Um verschiedene Pulver zu vermischen sind unter anderem zwei Prinzipien allgemein bekannt.

Beim Fluidisieren wird in einen Behälter, der mit einer Pulverschüttung gefüllt ist, von unten Druckluft eingeleitet. Das Einleiten der Druckluft führt zu einem Aufschwimmen des Pulvers. Um eine Vermischung des Pulvers zu erreichen muss eine große Luftmenge mit hohem Druck eingeleitet werden, die fallweise in einer gepulsten Strömung eingeleitet wird. Nachteilig ist hier, dass auf Grund der Lufteinleitung von unten im Wesentlichen eine Luftströmung nach oben besteht, und eine Querbewegung des Pulvers für eine gute Durchmischung fehlt. Weiterhin besteht die Gefahr bei einem Vermischen von Pulver mit unterschiedlicher Dichte, dass das leichtere Pulver durch die starke Luftströmung im oberen Bereich der Pulverschüttung verbleibt und nicht vermischt wird. Das Versorgungssystem mit Druckluft muss ausgelegt sein große Luftmassen mit hohem Druck zu liefern, was eine große Dimensionierung des Versorgungssystems mit den entsprechenden Gestehungs- und Betriebskosten erfordert, außerdem die Reinigung der austretenden Luft aufwendig macht, da große Filterflächen erforderlich sind, um das große Luftvolumen zu reinigen.

In dem anderen Prinzip wird die Pulverschüttung mit Hilfe eines Rührers, der mit einem Motor angetrieben wird, vermischt. Problematisch ist hier, dass die Motorleistung sehr hoch sein muss, da der Rührer in einer ruhenden Schüttung des Pulvers angefahren werden muss, was ein sehr hohes Anfahrdrehmoment des Motors erfordert. Der Rührer wird dabei einer hohen mechanischen Belastung durch die Gegenkraft der ruhenden Schüttung ausgesetzt, was dazu führt, dass die Bauteile des Rührers mechanisch robust ausgeführt sein müssen, um einerseits den auftretenden Kräften zu widerstehen, und um andererseits eine hohe Verschleißfestigkeit aufzuweisen. Zum guten Durchmischen der Pulver muss die Drehzahl des Rührers hoch genug sein, das Pulver aufzuwirbeln und die gesamte Pulverschüttung in Bewegung zu halten. Dadurch besteht neben der benötigen Auslegung des Rührers für eine hohe Dauerleistung zusätzlich die Gefahr, das Pulver zu schädigen.

Der vorliegenden Erfindung liegt die Aufgabe zugrunde, eine Vorrichtung zum Mischen von Pulver bereitzustellen, die kostengünstig in der Erstellung und im Betrieb ist, und außerdem auch verschiedene Pulver ohne die Gefährdung eines Beschädigens des Pulvers vermischt. Ferner liegt die Aufgabe zugrunde, eine Vorrichtung zum Herstellen von dreidimensionalen Bauteilen, z.B. durch Lasersintern, bereitzustellen, die geeignet ist, mit der Vorrichtung zum Mischen von Pulver zusammenzuwirken, wobei durch das Zusammenwirken der Vorrichtung zum Mischen von Pulver und der Vorrichtung zum Herstellen von dreidimensionalen Objekten die Qualität der Bauteile sowie die Effizienz der Herstellung verbessert werden soll.

Die Aufgabe wird durch die Merkmale der Ansprüche 1, 19 und 20 gelöst. Vorteilhafte Weiterentwicklungen sind Gegenstand der abhängigen Ansprüche.

Eine Vorrichtung zum Vermischen von Pulver ist so ausgebildet, dass sie sowohl eine Rührvorrichtung, als auch eine Druck-Fluid-Versorgungseinrichtung aufweist. Weiterhin ist eine Vorrichtung zum Herstellen von dreidimensionalen Objekten angepasst, mit der Vorrichtung zum Vermischen von Pulver verbunden zu werden, so dass die Vorrichtung zum Vermischen von Pulver und die Vorrichtung zum Herstellen von dreidimensionalen Objekten ein System bilden.

Durch die Ausrüstung der Vorrichtung mit sowohl der Rührvorrichtung als auch mit der Druck-Fluid-Versorgungseinrichtung ergibt sich der Effekt, dass die Vorrichtung trotz des Ausrüstens mit zwei Wirkmechanismen, nämlich der Rührvorrichtung und der Druck-Fluid-Versorgungseinrichtung, sowohl in den Gestehungskosten, als auch in den Betriebskosten günstiger als Vorrichtungen ist, die jeweils nur einen Wirkmechanismus aufweisen.

Der Kostenvorteil in der Gestehung rührt daher, dass die Rührvorrichtung und ein Behälter fragiler ausgebildet werden kann, da das Pulver beim Anlaufen der Rührvorrichtung nicht als ruhende Schüttung, quasi als Festkörper, vorliegt, sondern durch das eingeströmte Fluid bereits fluidisiert, also in einen flüssigkeitsähnlichen Zustand versetzt ist. Daher kann der Antriebsmotor der Rührvorrichtung wesentlicher schwächer ausgelegt werden, und auch die Festigkeits- und Steifigkeitsanforderungen an die Lagerungen und das Rührwerkzeug sind wesentlich geringer, so dass ein verringerter Materialeinsatz und die Verwendung eines günstigeren Materials möglich sind.

Die Druck-Fluid-Versorgungseinrichtung kann ebenfalls hinsichtlich des lieferbaren Drucks und Volumenstroms des Fluids schwächer ausgelegt werden, da bei einer reinen Mischvorrichtung, die mit einem Fluid betrieben wird, der Druck und der Volumenstrom des einströmenden Fluids wesentlich größer sein müssen, da das Fluid das Pulver nicht nur fluidisieren, sondern auch durchmischen, also eine Umwälzbewegung in das Pulver einbringen muss. Weiterhin sind aufwendige Steuerungsvorrichtungen, beispielsweise für ein gepulstes Einströmen des Fluids, nicht erforderlich.

Darüber hinaus kann nicht nur die Zuführeinrichtung des Fluids, sondern auch die Abführ- und Reinigungseinrichtung für das ausströmende Fluid kleiner dimensioniert werden, da zum einen das strömende Fluidvolumen geringer ist, aber auch die Verunreinigung des Fluids durch Pulverpartikel und Staub, der durch den hohen Druck und den großen Volumenstrom aufgewirbelt wird, wesentlich geringer ist.

Aufgrund der schwächeren Auslegung der Antriebe und der Wirkbaugruppen ist im Betrieb jeweils eine geringere Leistungsaufnahme erforderlich, so dass der gesamte Energieverbrauch geringer als bei Einzelsystemen ist.

Weitere Vorteile der kombinierten Bauweise der Vorrichtung zum Vermischen von Pulver sind, dass eine sehr gutes Vermischung in sehr kurzer Zeit erfolgt, und dass ein hoher Füllgrad der Vorrichtung möglich ist, da die Vorrichtung mit bis zu 80% ihres Behältervolumens mit Pulver befüllt werden kann, was wiederum für den Energieeinsatz günstig ist. Die mechanische Beanspruchung des Pulvers oder Scherung ist gering, so dass keine Kornveränderung auftritt und ein Vermischen von Pulvern mit Komponenten unterschiedlicher Dichte möglich ist.

Die Fluidisierung und das Rührwerk unterstützen den Austrag des Pulvers aus der Vorrichtung, da sowohl das Rührwerk als auch das einströmende Fluid das Pulver in einem bewegten flüssigkeitsähnlichen Zustand hält, so dass das Pulver durch die Schwerkraft ausgetragen werden kann. Durch das einströmende Fluid im Bodenbereich wird auch eine Reibung zwischen den Pulverpartikeln und dem Boden verhindert, so dass eine leichte Trichterform des Bodens ausreichend ist, um die Vorrichtung zu entleeren, was wiederum eine kompakte Bauform möglich macht und räumliche Ressourcen spart.

In der Gestehung ist eine einfache Skalierbarkeit möglich, und beim Betrieb sind außen an der Vorrichtung keine bewegten Teile vorhanden, so dass auf eine Schutzumzäunung verzichtet werden kann. Auch sind besondere Lärmschutzmaßnahmen nicht erforderlich, da der Betrieb sehr leise ist.

Durch die sehr gute Vermischung von einzelnen Pulvern miteinander werden die Probleme bei der Herstellung von dreidimensionalen Körpern, z.B. beim Lasersintern, vermieden, dass sich Schichten aus verschiedenen Pulvern, entweder Alt- und Neupulver, oder Pulver mit verschiedenen Korngrößen, verschiedener Dichte, usw., bilden. Dadurch wird die Qualität des hergestellten Bauteils hinsichtlich der Festigkeit und der Oberfläche verbessert und die Reproduzierbarkeit der Qualität erhöht. Außerdem werden, z.B. bei der Verwendung von thermoplastischen Pulvern, Probleme durch das thermische Altern des Altpulvers, das bei einer schlechten Vermischung schichtweise aufgebracht wird, vermieden.

Weitere Merkmale und Zweckmäßigkeiten ergeben sich aus der Beschreibung eines Ausführungsbeispiels anhand der Figuren. Von den Figuren zeigen
- Fig. 1: eine Ausführungsform der erfindungsgemäßen Vorrichtung zum Vermischen von Pulver, und
- Fig. 2: eine schematische Darstellung einer Lasersintereinrichtung als eine Ausführungsform einer Vorrichtung zur Herstellung von dreidimensionalen Objekten.

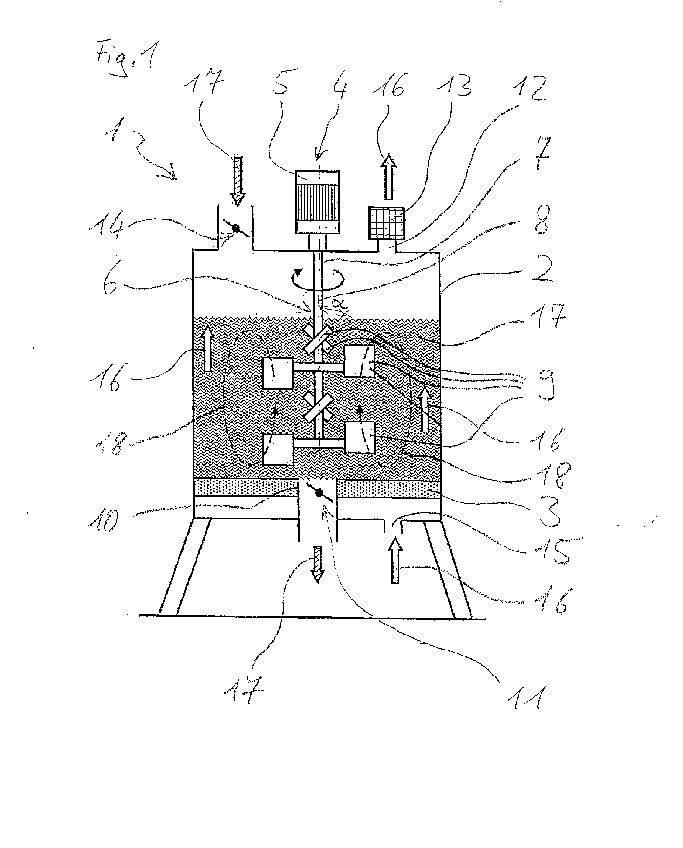

Die Figur 1 zeigt eine Vorrichtung 1 zum Vermischen von Pulver 17. Die Vorrichtung 1 weist einen Behälter 2 auf, der wiederum einen Boden aufweist und im Bereich seines Bodens mit einer fluiddurchlässigen Platte 3 versehen ist. Weiterhin ist die Vorrichtung 1 mit einer Rührvorrichtung 4 ausgestattet. Im Bereich seines Bodens ist der Behälter 2 mit einer Einströmöffnung 15 versehen, durch die ein Fluid 16 in den Behälter 2 einströmen kann. Am oberen Ende weist der Behälter 2 einen Deckel auf, der mit einer Pulvereinlassöffnung 14 und einer Fluidauslassöffnung 12 versehen ist, an der ein Filterelement 13 angebracht ist. Der Boden des Behälters 2 ist hier im Zentrum mit einer verschließbaren Auslassöffnung 11 versehen. Der Behälter hat einen horizontalen Querschnitt, der für eine gute Vermischung des Pulvers geeignet ist. Der horizontale Querschnitt ist in dieser Ausführungsform kreisförmig, kann aber in anderen Ausführungsformen polygonal, oval, etc. sein. Alternativ weist der Behälter 2 einen fluiddurchlässigen Boden auf, der dann leicht trichterförmig ist.

Die fluiddurchlässige Platte 3 ist beispielsweise aus einem porösen Material, z.B. einem gesinterten Kunststoffmaterial, aus einer Lochplatte, oder ähnlichem hergestellt, und ist für das Fluid 16 durchlässig. Die Platte 3 ist so geformt, dass sie außen eine Form aufweist, die in den inneren Querschnitt des Behälters 2 eingepasst ist. Im Zentrum ist die fluiddurchlässige Platte 3 mit einer Öffnung 10 versehen, die mit der Auslassöffnung 11 im Boden des Behälters fluchtet, und die selbe Größe aufweist. Die obere Fläche der fluiddurchlässigen Platte 3 ist leicht trichterförmig ausgebildet, so dass das Pulver 17 durch seine Schwerkraft aus dem Behälter fließt. Leicht trichterförmig bedeutet, dass ein Winkel, den die obere Fläche der Platte 3 in einem vertikaler Schnitt mit der horizontalen bildet ca. 20° ± 10° beträgt. Der sich daraus ergebende Effekt ist nachstehend beim Betrieb der Vorrichtung 1 beschrieben.

Die Rührvorrichtung 4 weist einen Motor 5 und ein Rührwerkzeug 6 auf. Die Rührvorrichtung 4 ist im Zentrum des Behälters 2 angeordnet.

Der Motor 5 ist als Elektromotor ausgebildet, der entsprechend ausgelegt ist, das Rührwerkzeug 6 zu drehen. Der Motor 5 ist am Deckel des Behälters 2 außerhalb des Behälters 2 angebracht.

Das Rührwerkzeug 6 weist eine Welle 7 auf, die um eine Achse 8 drehbar ist. Die Achse 8 der Welle 7 ist vertikal angeordnet.

An der Welle 7 sind Paddel 9 angebracht. Die Paddel 9 befinden sich jeweils radial neben der Welle 7. In dieser Ausführungsform sind die Paddel 9 über Befestigungselemente in vier Ebenen angeordnet, wobei immer zwei Paddel in einer Ebene angebracht sind. In alternativen Ausführungsformen können auch nur ein Paddel 9 oder auch mehrere Paddel 9 in einer Ebene angeordnet sein. Bei der Anordnung von einem Paddel 9 in einer Ebene ist jedoch zu beachten, dass neben einer Torsionskraft auch eine Biegekraft auf die Welle 8 ausgeübt wird. Die Paddel 9 schließen einen Winkel α mit der Achse 8 ein, dessen Betrag größer als 0° und kleiner als 90° ist, so dass die Paddel 9 zu der Achse 8 schräg stehen. Die Form der Paddel 9 ist hier rechteckig, kann jedoch auch rund, oval, oder eine andere günstige Form sein.

Die Einströmöffnung 15 ist mit einer nicht gezeigten Druck-Fluid-Versorgungseinrichtung verbunden. Die Druck-Fluid-Versorgungseinrichtung ist so ausgelegt, dass sie den Behälter 2 mit Druckluft als das Fluid 16 in ausreichender Menge bei einem ausreichenden Druck versorgt. Statt Druckluft kann auch ein anderes geeignetes Gas als Fluid 16 verwendet werden. Zwischen der Einströmöffnung 15 und der fluiddurchlässigen Platte 3 ist in dem Behälter eine Kammer vorhanden, in der sich das Fluid 16 entlang der fluiddurchlässigen Platte 3 ausbreiten kann, um die fluiddurchlässige Platte 3 gleichmäßig zu durchströmen.

Die Pulvereinlassöffnung 14 im Deckel des Behälters 2 ist so angepasst, dass das Pulver 17 durch die Pulvereinlassöffnung 14 in den Behälter 2 eingebracht werden kann. Die Pulvereinlassöffnung 14 ist durch ein geeignetes Absperrorgan verschließbar und mit einer nicht gezeigten Zuführvorrichtung für ein oder mehrere Pulver 17 verbunden. In alternativen Ausführungsformen kann die Pulvereinlassöffnung 14 auch an einer anderen Stelle, beispielsweise in der Seitenwand oberhalb der Füllhöhe der Pulverschüttung vorgesehen sein.

Die Fluidauslassöffnung 12 im Deckel des Behälters 2 ist angepasst, das in den Behälter 2 eingeströmte Fluid 16 wieder entweichen zu lassen. Die Fluidauslassöffnung 12 ist entweder direkt oder über eine Rohr- oder Schlauchleitung mit dem Filterelement 13 verbunden. Die Fluidauslassöffnung 12 kann statt im Deckel in einer alternativen Ausführungsform auch an einer anderen Stelle, wie z.B. der Seitenwand vorgesehen sein, ist aber im oberen Bereich des Behälters vorgesehen sein, so dass das Fluid erst nach dem Durchströmen des Pulvers austritt. Weiterhin ist alternativ auch eine Ausführungsform ohne das Filterelement 13 möglich.

Die verschließbare Auslassöffnung 11 ist angepasst, das durchmischte Pulver 17 aus dem Behälter 2 auszulassen. Die Auslassöffnung 11 ist mit einem geeigneten Absperrorgan versehen, das den Behälter in seinem geschlossenen Zustand sicher abschließt, und in seinem geöffneten Zustand einen geringen Strömungswiderstand für das ausströmende Pulver 17 bietet. Die Auslassöffnung 11 ist mit einer Vorrichtung zum Herstellen von dreidimensionalen Objekten verbunden. In alternativen Ausführungsformen kann die Auslassöffnung 11 anstatt mit der Vorrichtung zum Herstellen von dreidimensionalen Objekten auch mit einer Abfüllvorrichtung verbunden sein. Die Auslassöffnung 11 kann alternativ auch an einer anderen Stelle im Boden vorgesehen sein.

In einer alternativen Ausführungsform kann die Achse 8 der Welle 7 auch in einer anderen Richtung als vertikal im Raum orientiert sein. Der horizontale Querschnitt des Behälters 2 ist dann entsprechend angepasst.

Die Vorrichtung 1 ist so ausgelegt, dass sie Pulver aus verschiedenen Materialien vermischen kann. Die Korngröße des Pulvers 17 liegt in etwa zwischen 50 µm und 150 µm. Die Vorrichtung 1 ist angepasst, dass Druck und Volumenstrom des einströmenden Fluids 16 und Größe, geometrische Verhältnisse und Drehzahl der Rührvorrichtung 4 so ausgelegt sind, dass die Pulver 17 aus bestimmten Materialien mit den entsprechenden Korngrößen gut vermischt werden.

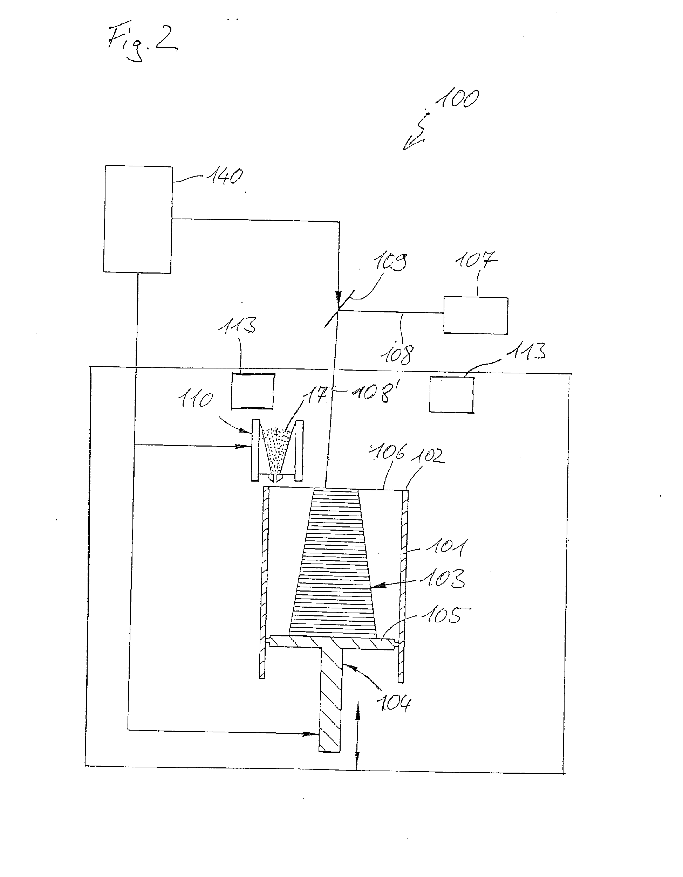

Wie aus Fig. 2 ersichtlich ist, weist eine Lasersintereinrichtung 100 als eine Ausführungsform einer Vorrichtung zum Herstellen von dreidimensionalen Objekten einen nach oben offenen Behälter bzw. Baubehälter 101 mit einem oberen Rand 102 auf. Der Querschnitt des Behälters 101 ist größer als die größte Querschnittsfläche eines herzustellenden Objekts 103. In dem Behälter 101 ist ein Träger 104 zum Tragen des zu bildenden Objekts 103 mit einer im Wesentlichen ebenen, dem oberen Rand 102 zugewandten Oberfläche 105 vorgesehen. Der Träger 104 ist mittels eines in Fig. 1 schematisch angedeuteten Antriebes in dem Behälter 101 in vertikaler Richtung auf- und abbewegbar. Der obere Rand 102 des Behälters 101 definiert eine Arbeitsebene 106.

Oberhalb der Arbeitsebene 106 ist eine Bestrahlungseinrichtung in Form eines Lasers 107 angeordnet, die einen gerichteten Lichtstrahl 108 abgibt. Es ist eine Ablenkeinrichtung 109, beispielsweise als ein System von Galvanometerspiegeln, vorgesehen, über die der Lichtstrahl 108 als abgelenkter Strahl 108' an jede gewünschte Stelle der Arbeitsebene 106 ablenkbar ist.

Ferner ist ein Beschichter 110 zum Aufbringen einer Schicht eines zu verfestigenden Pulvermaterials 17 auf die Trägeroberfläche 105 oder eine zuletzt verfestigte Schicht vorgesehen. Der Beschichter 110 ist mittels eines schematisch angedeuteten Antriebs von einer ersten Endstellung auf einer Seite des Behälters 101 in eine zweite Endstellung auf der gegenüberliegenden Seite des Behälters 101 über der Arbeitsebene 106 hin- und herbewegbar. Zum Befüllen des Beschichters 110 ist oberhalb der Endpositionen des Beschichters 110 jeweils ein Befüllbehälter 113 zum Befüllen des Beschichters 110 mit Pulvermaterial 17 vorgesehen.

Die Befüllbehälter 13 sind mit der Auslassöffnung 11 der Vorrichtung 1 verbunden, die in dieser Ausführungsform als eine separate Vorrichtung vorgesehen ist. In alternativen Ausführungsformen ist die Vorrichtung 1 in die Vorrichtung 100 integriert.

Es ist ferner eine Steuereinrichtung 140 vorgesehen, durch die der Antrieb zur Einstellung der Position des Trägers 104, der Antrieb zum Verfahren des Beschichters 110 und der Antrieb zum Verstellen der Ablenkeinrichtung 109 koordiniert oder unabhängig voneinander steuerbar sind. In Ausführungsformen, in denen die Vorrichtung 1 in die Vorrichtung 100 integriert ist, kann auch der Betrieb der Vorrichtung 1 durch die Steuereinrichtung 140 steuerbar sein.

Im Betrieb wird der Behälter 2 der Vorrichtung 1 mit den gewünschten Pulvern 17 durch die Pulvereinlassöffnung 14 befüllt. Dazu wird das Absperrorgan der Pulvereinlassöffnung 14 geöffnet und über die Zuführvorrichtung werden die Pulver in den Behälter 2 eingebracht.

Nach dem Befüllen wird durch die Druck-Fluid-Versorgungseinrichtung durch die Einströmöffnung Druckluft 16 in den Raum unterhalb der fluiddurchlässigen Platte 3 eingeblasen, die sich in dem Raum verteilt, und dann gleichmäßig durch die fluiddurchlässige Platte 3 strömt. Durch die in einem konstanten Strom durch das Pulver 17 strömende Druckluft 16 wird das Pulver 17 fluidisiert, also in einen flüssigkeitsähnlichen Zustand versetzt. Dadurch wird die Beweglichkeit des Pulvers erhöht. Die eingebrachte Druckluft tritt nach dem Durchströmen des Pulvers 17 durch die Fluidauslassöffnung 12 aus dem Behälter 2 aus und wird anschließend durch das Filterelement 13 von Pulverpartikeln und sonstigem Staub gereinigt.

Nach dem Fluidisieren des Pulvers, was während des gesamten Mischvorgangs aufrechterhalten wird, wird das Rührwerk in Betrieb gesetzt. Durch das Fluidisieren des Pulvers 17 ist der Widerstand des Pulvers 17 gegen die Bewegung der Paddel 9 gering, so dass das Anfahrmoment des Motors 5 klein sein kann, und die Anforderung an die mechanische Festigkeit des Rührwerkzeugs 6 nicht hoch ist. Durch die Bewegung der Paddel 9 und deren Schrägstellung gegenüber der Achse 8 wird das Pulver 17 im Bereich des Rührwerkzeugs 6 nach oben und seitlich bewegt. Im Wandbereich des Behälters 2 sinkt das Pulver 17 ab. Dadurch entsteht ein Pulverstrom 18 der zum einen als ein radial umlaufender Strom über den gesamten Umfang ausgebildet ist, als auch eine tangentiale Komponente aufweist, was einen schonenden Mischvorgang mit minimaler Scherung des Pulvers und eine gute Durchmischung des Pulvers bewirkt, so dass die Mischzeit vergleichsweise kurz ist.

Wenn der Mischvorgang abgeschlossen ist, wird das Absperrorgan der verschließbaren Auslassöffnung 11 geöffnet, und das Pulver 17 strömt durch die Schwerkraft aus dem Behälter 2. Bei dem Ausströmen des Pulvers 17 wird sowohl die Rührvorrichtung 4 als auch die Druck-Fluid-Versorgungseinrichtung weiter betrieben, so dass das Pulver in flüssigkeitsähnlicher Form ausströmen kann und nicht durch seine Schwerkraft eine ruhende Schüttung entsteht. Durch die einströmende Druckluft 16 wird ein Ablagern des Pulvers 17 auf der fluiddurchlässigen Platte 3 verhindert. Da dadurch die Reibungskraft zwischen dem Pulver 17 und der oberen Fläche der Platte 3 verringert bzw. aufgehoben wird, strömt das Pulver 17 auch bei einer nur leichten Trichterform der Platte 3 durch seine Schwerkraft aus dem Behälter 2, so dass Bauraum, der durch eine stärkere Trichterform bedingt wäre, eingespart werden kann.

Die Behälter 113 werden mit dem vermischten Pulver 17 befüllt, indem das aus dem Behälter 2 ausströmende Pulver 17 mittels eines nicht gezeigten Transportmediums, z.B. Druckluft, die in der Verbindungsleitung zwischen der Auslassöffnung 11 und den Behältern 113 strömt, in die Behälter 113 transportiert wird.

Der Bauprozess zum Herstellen der dreidimensionalen Körper läuft dann in bekannter Weise ab.

Die Erfindung ist nicht auf das Lasersintern beschränkt, sondern ebenfalls in anderen pulverbasierten generativen Verfahren zum Herstellen von dreidimensionalen Objekten anwendbar. Ein weiteres Beispiel für ein derartiges Verfahren ist das dreidimensionale Drucken, wobei eine Pulverschicht mittels eines Binders verfestigt wird. Ein noch weiteres Beispiel ist das Maskensintern, bei dem anstelle eines Lasers eine ausgedehnte Lichtquelle, die die Pulverschicht selektiv über eine Maske belichtet, verwendet wird.

## Patentansprüche

1. Vorrichtung (1) zum Vermischen von Pulver (17) für eine Vorrichtung zum Herstellen eines dreidimensionalen Objekts mit
einem Behälter (2) der angepasst ist, das Pulver (17) aufzunehmen, wobei der Behälter (2) eine fluiddurchlässige untere Platte (3) aufweist,
einer Druck-Fluid-Versorgungseinrichtung, die mit dem Behälter (2) so verbunden ist, dass durch die fluiddurchlässige untere Platte (3) ein Fluid (16) einströmt, und die so angepasst ist, dass das durch die fluiddurchlässige Platte (3) einströmende Fluid (16) das Pulver (17) nach oben bewegt,
**dadurch gekennzeichnet, dass**
die Vorrichtung (1) eine Rührvorrichtung (4) aufweist, die angepasst ist, das Pulver (17) zu bewegen.

2. Vorrichtung (1) gemäß Anspruch 1, **dadurch gekennzeichnet, dass** die Rührvorrichtung (4) einen Motor (5) und ein Rührwerkzeug (6), das eine Welle (7) mit einer Achse (8) hat, aufweist.

3. Vorrichtung (1) gemäß Anspruch 2, **dadurch gekennzeichnet, dass** das Rührwerkzeug (6) mit mehreren Paddeln (9) quer, insbesondere radial, zu der Achse (8) der Welle (7) versehen ist, und dass die Paddel (9) axial zu der Welle (7) in mehreren Etagen angeordnet sind.

4. Vorrichtung (1) gemäß Anspruch 3, **dadurch gekennzeichnet, dass** die Paddel gegenüber der Achse (8) der Welle (7) einen Winkel α einschließen, der größer als 0° und kleiner als 90° ist, so dass die Rührvorrichtung (4) so angepasst ist, dass bei einem Drehen der Welle (7) die Paddel (9) das Pulver (17) im Bereich des Rührwerkzeugs (6) aufwärts und seitwärts gerichtet bewegen.

5. Vorrichtung (1) gemäß einem der Ansprüche 2 bis 4, **dadurch gekennzeichnet, dass** die Achse (8) der Welle (7) vertikal angeordnet ist.

6. Vorrichtung (1) gemäß einem der vorangehenden Ansprüche, **dadurch gekennzeichnet, dass** die Rührvorrichtung (4) in einer horizontalen Ebene im Zentrum des Behälters (2) angeordnet ist.

7. Vorrichtung (1) gemäß einem der vorangehenden Ansprüche, **dadurch gekennzeichnet, dass** die Vorrichtung (1) so angepasst ist, dass das Fluid (16) in einem konstanten Strom einströmt.

8. Vorrichtung (1) gemäß einem der vorangehenden Ansprüche, **dadurch gekennzeichnet, dass** die fluiddurchlässige Platte (3) im ihrem Zentrum mit einer Öffnung (10) versehen ist, und dass die Vorrichtung (1) im unteren Bereich eine verschließbare Öffnung (11) aufweist, die mit der Öffnung (10) in der fluiddurchlässigen Platte (3) fluchtet.

9. Vorrichtung (1) gemäß einem der vorangehenden Ansprüche, **dadurch gekennzeichnet, dass** die fluiddurchlässige Platte (3) leicht trichterförmig ist.

10. Vorrichtung (1) gemäß einem der vorangehenden Ansprüche, **dadurch gekennzeichnet, dass** die Vorrichtung (1) im oberen Bereich eine Fluidauslassöffnung (12) aufweist, die mit einem Filterelement versehen ist.

11. Vorrichtung (1) gemäß einem der vorangehenden Ansprüche, **dadurch gekennzeichnet, dass** die Vorrichtung (1) eine verschließbare Pulvereinlassöffnung (14) aufweist, durch die der Behälter (2) befüllt wird, und die Pulvereinlassöffnung (14) vorzugsweise im Deckel vorgesehen ist.

12. Vorrichtung (100) zum Herstellen von dreidimensionalen Objekten mit einem Träger (105), auf dem das Objekt aufgebaut wird,
einem Beschichter (110) zum Aufbringen von Schichten eines verfestigbaren Pulvermaterials an den dem Objekt in der jeweiligen Schicht entsprechenden Stellen,
einer Verfestigungseinrichtung (107) zum Verfestigen des Pulvermaterials an den dem Objekt entsprechenden Stellen der Schicht, **dadurch gekennzeichnet, dass** die Vorrichtung (100) angepasst ist, mit der Vorrichtung (1) gemäß einem der Ansprüche 1 bis 11 verbunden zu werden.

13. System aus der Vorrichtung (1) gemäß einem der Ansprüche 1 bis 11 und der Vorrichtung (100) gemäß Anspruch 12.

14. System gemäß Anspruch 13, **dadurch gekennzeichnet, dass** die Vorrichtung (1) separat von der Vorrichtung (100) angeordnet ist.

15. System gemäß Anspruch 13, **dadurch gekennzeichnet, dass** die Vorrichtung (1) in die Vorrichtung (100) integriert ist.
